# EUROPEAN PATENT APPLICATION

(11) **EP 4 765 464 A1**
(43) Date of publication of application: **24.06.2026**
(21) Application number: 25854578.9
(22) Date of filing: 04.08.2025
(51) Int. Cl.: H01M 50/60, H01M 50/166, H01M 10/04

(54) **SECONDARY BATTERY AND METHOD FOR MANUFACTURING SAME**

(30) Priority: 12.08.2024 KR 20240107846
(71) Applicant: LG Energy Solution, Ltd., Seoul 07335 (KR)
(72) Inventor: LEE, Min Kyu, Daejeon 34122 (KR); CHOI, Ji Eun, Daejeon 34122 (KR); KIM, Sang Hun, Daejeon 34122 (KR); LEE, Jae Ho, Daejeon 34122 (KR); LEE, Ji Sun, Daejeon 34122 (KR)
(74) Representative: Plasseraud IP
(86) International application number: PCT/KR2025/011564
(87) International publication number: WO 2026/038770

(57) **Abstract**

The present invention relates to a secondary battery and a method for manufacturing the same, The secondary battery according to an aspect of the present invention may comprise a cap comprising a first surface, a second surface perpendicular to or inclined to the first surface, and a corner connecting the first surface to the second surface; an electrode assembly, one side of which is covered by the cap; and an exterior film comprising a sheet-shaped accommodation part surrounding the electrode assembly in a circumferential direction, first and second extension parts extending respectively from one edge and the other edge of the accommodation part, and a coupling part coupling the first and second extension parts to each other. The coupling part may be disposed correspondingly to the corner.

## Description

### TECHNICAL FIELD

### CROSS-REFERENCE TO RELATED APPLICATIONS

The present application claims the benefit of the priority of Korean Patent Application No. 10-2024-0107846, filed on August 12, 2024, which is hereby incorporated by reference in its entirety.

### TECHNICAL FIELD

The present invention relates to a secondary battery and a method for manufacturing the same, and more particularly, to a secondary battery capable of charging and discharging electrical energy and a method for manufacturing the same.

### BACKGROUND ART

In general, types of secondary batteries include nickel cadmium batteries, nickel hydrogen batteries, lithium ion batteries, lithium ion polymer batteries and so on. Such secondary batteries are applied and used not only in small products such as digital cameras, P-DVDs, MP3Ps, mobile phones, PDAs, portable game devices, power tools, and E-bikes, but also in large products requiring high output such as electric vehicles and hybrid vehicles, power storage devices for storing surplus power or renewable energy, and backup power storage devices.

Here, the secondary battery comprises an electrode assembly in which a positive electrode, a negative electrode, and a separator are stacked, a case accommodating the electrode assembly, and an electrode lead for conducting electricity between the electrode assembly and the outside. The secondary battery may be referred to as a cylindrical type, a prismatic type, or a pouch type according to a structure or a shape of the case. The case is required to have a predetermined function for an operation of the secondary battery.

Recently, a case for a secondary battery including a pair of caps covering both sides of an electrode assembly and an exterior film surrounding the electrode assembly has been developed. Such a case is required to have sealing properties to prevent leakage of an internal material (e.g., an electrolyte) and secure safety.

### DISCLOSURE

### TECHNICAL PROBLEM

The present invention has been made to solve the above problems, and an object of the present invention is to provide a secondary battery having improved sealing properties and a method for manufacturing the same.

The objects of the present invention are not limited to the above-mentioned objects, and other objects not mentioned will be clearly understood by those skilled in the art to which the present invention pertains from the following description.

### TECHNICAL SOLUTION

According to an aspect of the present invention, a secondary battery comprising: a cap comprising a first surface, a second surface perpendicular to or inclined to the first surface, and a corner connecting the first surface to the second surface; an electrode assembly, one side of which is covered by the cap; and an exterior film comprising a sheet-shaped accommodation part surrounding the electrode assembly in a circumferential direction, first and second extension parts extending respectively from one edge and the other edge of the accommodation part, and a coupling part coupling the first and second extension parts to each other, wherein the coupling part is disposed correspondingly to the corner.

Here, the coupling part may be in contact with the corner.

Here, the corner may be rounded.

Here, the coupling part may be disposed in one section between a first point and a second point with respect to a cross-section of the corner, the first point may be a point at which the corner and the first surface meet each other, and the second point may be a point at which the corner meets the second surface.

Here, the one section may be a section from a third point to a fourth point, and when a length measured from the first point to the second point along the cross-section of the corner is referred to as a corner length, the third point may be spaced apart from the first point along the cross-section of the corner by 1/3 of the corner length, and the fourth point may be spaced apart from the first points along the cross-section of the corner by two thirds of the corner length.

Here, a cross-section of the corner may have an arc shape or an elliptical arc shape.

Here, the one section may be a section from the third point to the fourth point, the third point may be spaced apart from the first point by 30 degrees with respect to a center of the arc or the elliptical arc, and the fourth point may be spaced apart from the first position by 60 degrees with respect to a center of the arch or the elliptical arc.

Here, the electrode assembly may extend in a first direction, the cap may cover one side of the electrode assembly in the first direction, and the corner and the coupling part may extend along the first direction.

Here, the cap may be provided in pairs and disposed on both sides of the electrode assembly, respectively, and the coupling part may be provided in pairs to correspond to the cap.

Here, the first extension part may be parallel to the second extension part.

Here, the first surface may be perpendicular to the second surface.

Here, the coupling part may be formed by bonding the first extension part and the second extension part to each other.

According to another aspect of the present invention, a method for manufacturing a secondary battery is provided, the method comprising: positioning a cap including a first surface, a second surface perpendicular to or inclined to the first surface, and a corner connecting the first surface to the second surface on one side of an electrode assembly; surrounding the electrode assembly with an accommodation part of an exterior film having a sheet shape; positioning first and second extension parts extending respectively from one edge and the other edge of the accommodation part, to correspond to the corner; and forming a coupling part for coupling the first extension part and the second extension part to each other at a position corresponding to the corner.

Here, the method may further include coupling the first and second surfaces to the accommodation part.

Here, the forming of the coupling part may be performed before the coupling of the first and second surfaces to the accommodation part.

Here, the method may further include forming an additional coupling part to couple areas of the first and second extension parts, which are not coupled by the coupling part.

Here, the additional coupling part may extend along the edge of the accommodation part, and the coupling part may be disposed at one end of the additional coupling part.

Here, in the step of forming the coupling part, heat or pressure may be applied to at least one of the first extension part and the second extension part.

### ADVANTAGEOUS EFFECTS

According to an aspect of the present invention, since the coupling part coupling the first extension part and the second extension part extending from the accommodation part is disposed to correspond to the corner of the cap, the coupling force between the exterior film and the cap may be improved. Thus, the sealing property of the secondary battery may be improved.

The effects of the present invention are not limited to the above-described effects, and effects not mentioned will be clearly understood by those skilled in the art to which the present invention pertains from the present specification and the accompanying drawings.

### BRIEF DESCRIPTION OF THE DRAWINGS

FIG. 1 is a perspective view of a secondary battery according to an embodiment of the present invention, when viewed from above.
FIG. 2 is a cross-sectional view taken along line I-I of FIG. 1.
FIG. 3 is a cross-sectional view taken along line II-II of FIG. 1.
FIG. 4 is an enlarged view of a portion A of FIG. 3.
FIG. 5 is a flowchart of a method for manufacturing a secondary battery according to an embodiment of the present invention.
FIG. 6 is a view for describing a method for manufacturing a secondary battery according to an embodiment of the present invention.

### MODE FOR CARRYING OUT THE INVENTION

Preferred embodiments of the present invention will be described in detail so that those skilled in the art can easily carry out the invention. However, the present invention may be embodied in various different forms and is not limited or restricted by the following examples.

In order to clearly describe the present invention, detailed descriptions of parts unrelated to the description or related well-known technologies that may unnecessarily obscure the gist of the present invention are omitted, and in the present specification, in adding reference numerals to components of each drawing, the same or similar reference numerals are assigned to the same or similar components throughout the specification.

In addition, terms or words used in the specification and claims should not be restrictively interpreted as ordinary meanings or dictionary meanings, and should be interpreted as meanings and concepts conforming to the technical spirit of the present invention based on the principle that an inventor can properly define the concept of a term to describe his or her invention in the best way.

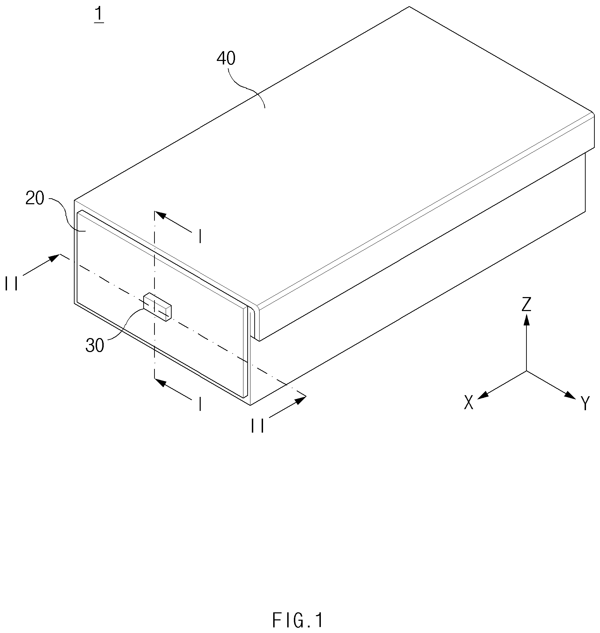

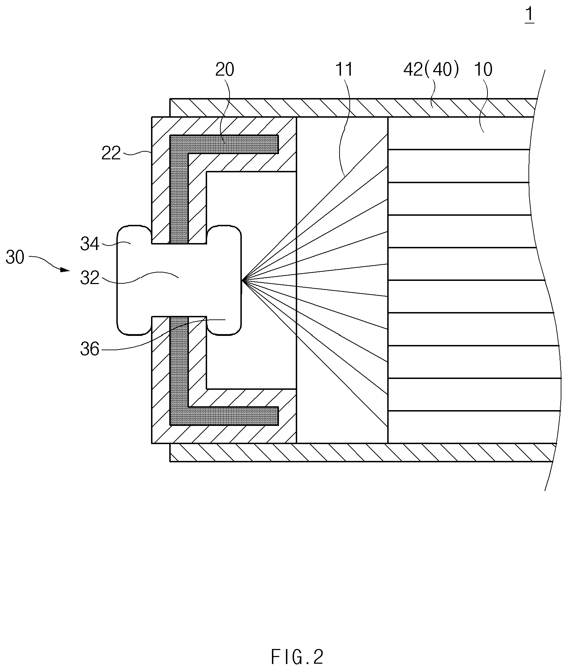

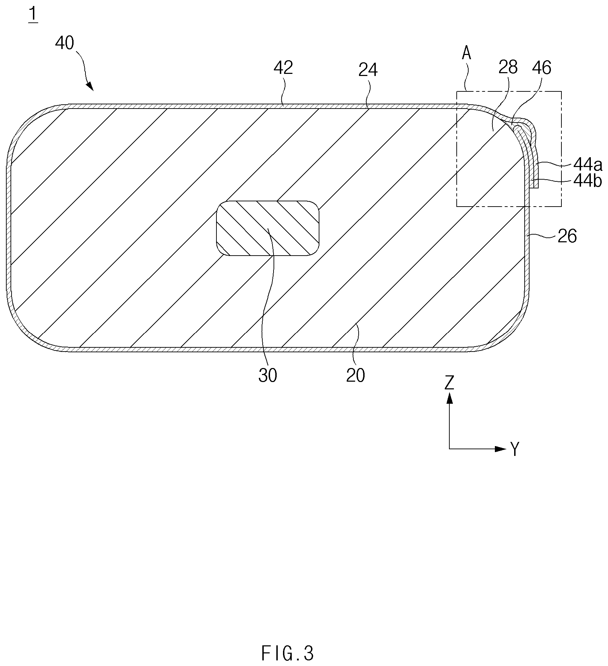

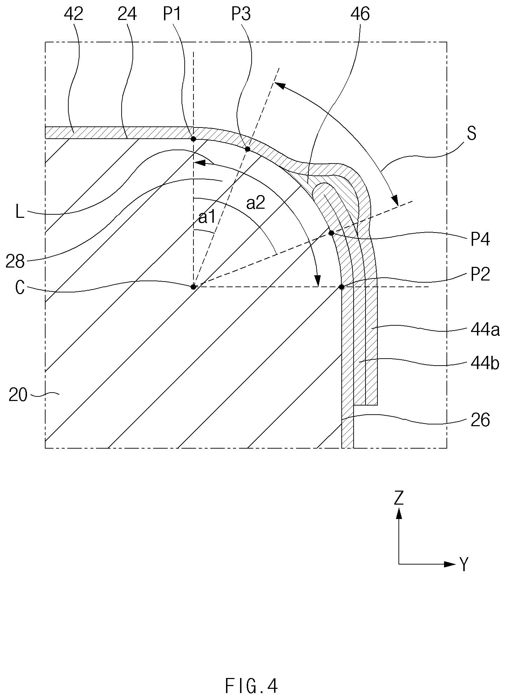

FIG. 1 is a perspective view of a secondary battery according to an embodiment of the present invention, when viewed from above. FIG. 2 is a cross-sectional view taken along line I-I of FIG. 1. FIG. 3 is a cross-sectional view taken along lines II-II of FIG. 1. FIG 4 is an enlarged view of a portion A of FIG. 3.

FIGS. 1 to 4 discloses a secondary battery according to an embodiment of the present invention. Referring to FIGS. 1 to 4, a secondary battery 1 according to an embodiment of the present invention may be formed by sealing an electrode assembly 10 for charging and discharging electrical energy by a cap 20 and an exterior film 40.

Here, in the secondary battery 1 according to the present embodiment, since the coupling part 46 coupling the first and second extension parts 44a and 44b of the exterior film 40 is disposed at the corner 28 of the cap 20, the secondary battery 1 may have high airtightness, insulation, and durability. Hereinafter, components of the secondary battery 1 according to an embodiment of the present invention will be described in detail.

Referring to FIGS. 1 and 2, a secondary battery 1 according to an embodiment of the present invention may include an electrode assembly 10. The electrode assembly 10 may extend in a predetermined direction. Hereinafter, the direction will be referred to as a longitudinal direction (X-axis direction) of the electrode assembly 10.

The electrode assembly 10 may be a component to perform a charging/discharging function. For this, the electrode assembly 10 may have a structure in which a positive electrode, a separator, and a negative electrode are sequentially stacked. The electrode assembly 10 may be classified into a cylindrical type, a stacked type, or a stack and folding type according to a shape thereof, However, in this embodiment, a type of the electrode assembly 10 is not particularly limited.

In this embodiment, the electrode assembly 10 may be provided with an electrode tab 11. The electrode tab 11 may be a component for causing an electrode (a positive electrode or a negative electrode) of the electrode assembly 10 to be electrically connected to the outside. The electrode tab 11 may extend from the electrode toward the outside of the electrode assembly 10. The electrode tab 11 may couple to a terminal 30 to be described later.

The secondary battery 1 according to an embodiment of the present invention may include a cap 20. The cap 20 may be a component to isolate and seal the electrode assembly 10 from the outside. A predetermined resin layer may be provided on an outer surface of the cap 20 to be coupled to an exterior film 40, which will be described later.

Here, in this embodiment, the cap 20 may be provided in pairs and disposed on both sides of the electrode assembly 10 in the longitudinal direction (the X-axis direction). Both sides of the electrode assembly 110 may be respectively covered by the pair of caps 20.

In this embodiment, the cap 20 may include a plate part covering one side of the electrode assembly 10 and a sidewall part extending from an edge of the plate part toward the electrode assembly 10. When viewed in a longitudinal direction (X-axis direction) of the electrode assembly 10, the sidewall part may have a rectangular ring shape.

Here, in this embodiment, the cap 20 may include an outer surface 22. The outer surface 22 may be a surface facing the outside of the electrode assembly 10 among both surfaces of the plate part. The outer surface 22 may extend in directions (Y-axis and Z-axis directions) perpendicular to a longitudinal direction (X-axis direction) of the electrode assembly 10.

Referring to FIGS. 2 to 4, in this embodiment, the cap 20 may include a first surface 24, a second surface 26, a third surface, and a fourth surface. The first to fourth surfaces may be a portion of an outer surface of a sidewall of the cap 20. The first to fourth surfaces may constitute an outer circumferential surface of the sidewall.

More specifically, in this embodiment, the first surface 24 may be a surface extending in the leftward/rightward direction (Y-axis direction) from an upper portion (positive direction of the Z-axis) of the cap 20, the second surface 26 may be a surface extending in the upward/downward direction (Z-axis direction) from a right portion (positive direction of the Y-axis) of the cap 26, the third surface may be a surface opposite to the first surface 24 at a lower portion (negative direction of the Z-axis) and the fourth surface may be a surface opposite to the second surface 26 at a left portion (negative direction of the Y-axis) in the cap 20.

As illustrated, in this embodiment, the first surface 24 and the second surface 26 may be perpendicular to each other, and the first surface 24 and the third surface may be parallel to each other. However, the second surface 26 and the third surface may be disposed to be inclined at a predetermined angle with respect to the first surface 24.

In this embodiment, the cap 20 may include an corner 28. The corner 28 may be a portion connecting the first surface 24 and the second surface 26. One edge of the first surface 24 and one edge of the second surface 26 may extend parallel to each other in the longitudinal direction (X-axis direction) of the electrode assembly 10, and the corner 28 connecting the edges may also extend in the direction (X-axis direction).

Here, the corner 28 may be provided in plurality. As described above, one of the plurality of corners 28 may connect the first surface 24 to the second surface 24, another may connect the first surface 24 to a fourth surface, another may connect the second surface 26 to a third surface, and another may connect the third surface to a fourth surface.

In other words, the plurality of corners 28 may be four in FIG. 3 and may be provided at the upper left side, the lower left side, the upper right side, and the lower right side of the cap 20, respectively. Hereinafter, the corners 28 will be described on the premise that the corner 28 is a portion connecting the first surface 24 and the second surface 26.

Here, referring to FIGS. 3 and 4, the corner 28 may be formed to be rounded. A cross-section of the corner 28 may have an arc shape in which a center C is disposed inside the cap 20. The cross-section may be a cross-section perpendicular to a longitudinal direction (X axis direction) of the electrode assembly 10. As necessary, the cross-section of the corner 28 has another shape. For example, the cross-section of the corner 28 may have a convex curve such as an elliptical arc shape.

In this embodiment, the cap 20 has been described as including a plate part and a sidewall part. However, a specific shape or structure of the cap 20 is not particularly limited as long as the cap 20 covers one side of the electrode assembly 10.

Also, in this embodiment, as the sidewall portion of the cap 20 has a rectangular ring shape, it has been described that the outer surface of the sidewall portion is constituted by the first to fourth surfaces and four corners connecting the first to fourth surfaces. However, the number of surfaces or corners may be appropriately changed depending on the shape of the cap 20.

Referring again to FIGS. 1 and 2, the secondary battery 1 according to an embodiment of the present invention may include a terminal 30. The terminal 30 may be a component for mediating electrical connection between the electrode assembly 10 and the outside. For this purpose, the terminal 30 may be made of a conductive material.

In this embodiment, the terminal 30 may include a body part 32. The body part 32 may pass through the cap 20. The body part 32 may pass over the outer surface 22 of the cap 20. The body part may have a cylindrical shape, but is not limited thereto.

In this embodiment, the terminal 30 may include an outer hook part 34. The outer hook part 34 may be provided on one side of the body part 32. The one side may be a portion facing the outside of the electrode assembly 10.

Here, the outer locking part 34 may have a cross-sectional area greater than that of the body part 32. Therefore, the outer locking part 32 may be locked on the outer surface 22 of the cap 20. Thus, the terminal 30 may be limited to move toward the electrode assembly 10 over a predetermined distance.

In this embodiment, the terminal 30 may include an inner hook part 36. The inner hook part 36 may be provided on the other side of the body part 32. The other side may be a portion facing the electrode assembly 10. An electrode tab 11 may be coupled to the inner hook part 36. For example, the electrode tab 11 may be welded to the outer surface of the inner hook part 36, but is not limited thereto.

Here, the inner hook part 36 may have a cross-sectional area greater than that of the body part 32. Therefore, the inner hook part 36 is hooked on the inner surface of the cap 20. Here, the inner surface may be a surface facing the outer surface 22. Thus, the terminal 30 may be limited to move to the outside of the electrode assembly 10 over a predetermined distance.

Referring to FIGS. 1 to 4, the secondary battery 1 according to an embodiment of the present invention may include an exterior film 40. The exterior film 40 may be a component to cover a remaining portion of the outer surface of the electrode assembly 10, which is not covered by the cap 20. Accordingly, the electrode assembly 10 may be isolated from the outside and sealed.

In this embodiment, the exterior film 40 may include an accommodation part 42. The accommodation part 42 may have a sheet shape. The accommodation part 42 may surround the electrode assembly 10 in a circumferential direction. Therefore, the electrode assembly 10 may be placed in a space partitioned from the outside.

Here, an edge portion of the accommodation part 42 disposed in the longitudinal direction (the X-axis direction) of the electrode assembly 10 may be disposed so that at least a portion thereof overlaps the first to fourth surfaces of the cap 20. The edge portion may surround the cap 20 in the circumferential direction. The edge portion may be coupled to each of the first to fourth surfaces.

For example, the edge portion of the accommodation part 42 may be pressed to the first to fourth surfaces by heat or pressure, respectively. At this time, the edge portion and the first to fourth surfaces may be bonded to each other as the resin layer provided in the exterior film 40 or the cap 20 is melted. Of course, the edge portion and the first and fourth surfaces may be bonded to one another by a separate adhesive or the like interposed therebetween.

In this embodiment, the exterior film 40 may include first and second extension parts 44a and 44b. The first extension part 44a may extend from one edge of the accommodation part 42, and the second extension part 44b may extend from the other edge of the accommodation part.

Here, one edge and the other edge of the accommodation part 42 may be edges disposed parallel to each other in the circumferential direction of the electrode assembly 10. The one edge and the other edge may be provided along the longitudinal direction (the X-axis direction) of the electrode assembly 10.

In this embodiment, the first and second extension parts 44a and 44b may extend to a predetermined length in the longitudinal direction (X-axis direction) of the electrode assembly 10. Here, the first and second extension parts 42a and 42b may extend in parallel to each other and overlap each other.

Referring to FIGS. 3 and 4, the exterior film 40 of the secondary battery according to an embodiment of the present invention may include a coupling part 46. The coupling part 46 may be a component for coupling the first extension part 44a and the second extension part 44b. Accordingly, the electrode assembly surrounded by the cap 20 and the exterior film 40 may be isolated from the outside and sealed.

The coupling part 46 may be formed by applying heat or pressure to the first extension part 44a and the second extension part 44b disposed to overlap each other. As the resin layer provided on the outer surfaces of the first extension part 44a and second extension part 44b is melted by the heat or pressure, the coupling part 46 may be formed. Of course, the coupling part 46 may also be formed of a separate adhesive interposed between the first and second extension parts 44a and 44b.

Here, the corner 28 of the cap 20 is a portion to which force, heat, or pressure for coupling is hardly applied due to structural characteristics. The coupling part 46 may be disposed to correspond to the corner 28, and thus, leakage between the cap 20 and the exterior film 40 may be prevented. Accordingly, the sealing property of the secondary battery may be improved.

Particularly, in this embodiment, the coupling part 46 may be configured to be adjacent to the corner 28 of the cap 20. Thus, the coupling part 46 may more strongly couple the corner 28 and the first and second extension parts 44a and 44b to further improve the sealing property of the secondary battery.

Here, in this embodiment, the coupling part 46 may be provided along the extension direction (X-axis direction) of the corner 28. Accordingly, the first and second extension parts 44a and 44b may be strongly coupled to each other in the entire section along the length of the corner 28.

Referring to FIG. 4, in this embodiment, the coupling part 46 may be disposed in one section S on the corner 28 with respect to a cross-section of the corner 28. Here, the cross-section of the corner 28 may be a cross-section along a plane (a plane including the Y-axis and the Z-axis) perpendicular to the longitudinal direction (the X-axis direction) of the corner 28.

In the present embodiment, the section S may be located between a first point P1 and a second point P2. Here, the first point P1 may be a point where the first surface 24 and the corner 28 meet, and the second point P2 may be a point where the second surface 26 and the corner 28 meet. The first and second points P1, P2 may lie on a cross-section of the corner 28.

Here, the one section S may be a section from the third point P3 to the fourth point P4. Here, when a length measured from the first point P1 to the second point P2 along the cross-section of the corner 28 is referred to as the corner length L, the third point P3 may be a point spaced apart from the first point P1 by one third of the corner length L.

Alternatively, the third point P3 may be a point spaced apart from the first point P1 by 2/5 of the corner length L. Alternatively, the third point P3 may a point spaced apart from the first point P 1 by 3/7 of the corner length L. Alternatively the third point P3 may a point space from the first point P1 by 1/2 of the corner length L.

In other words, the third point P3 may be a point spaced apart from the first point P1 by a first angle a1 with respect to the center C of the corner 28. Here, the center C of the corner 28 may be a center of an arc (or an elliptical arc) of a cross-section of the corner 28, and the first angle a1 may be 30 degrees. Alternatively, the first angle a1 may be 36 degrees. Alternatively, the first angle a 1 may be 39 degrees. Alternatively, the first angle a may be 45 degrees.

Through this configuration, since the coupling part 46 and the first point P1 may be disposed at a predetermined distance from each other, the coupling part 46 may more tightly fill the space between the exterior film 40, the corner 28, and the first surface 24. Thus, the sealing property of the secondary battery may be further improved.

In this embodiment, the fourth point P4 may be a point spaced apart from the first point P1 by 2/3 of the corner length L. Alternatively, the fourth point P4 may be the point spaced apart from the first point P 1 by 3/5 of the corner length L. Alternatively the fourth point P4 may be the point spaced apart from the first point P1 4/7 of the corner length L. Alternatively the fourth point P4 may be the points spaced apart from the first point P1 1/2 of the corner length L.

In other words, the fourth point P4 may be a point spaced apart from the first point P1 by a second angle a2 with respect to the center C of the corner 28. Here, the second angle a2 may be 60 degrees. Alternatively, the second angle a2 may be 54 degrees. Alternatively, the second angle a 2 may be 51 degrees. Alternatively, the second angle a1 may be 45 degrees.

Through this configuration, since the coupling part 46 and the second point P2 may be disposed at a predetermined distance from each other, the coupling part 46 may more tightly fill the space between the exterior film 40, the corner 28, and the second surface 26. Thus, the sealing property of the secondary battery may be further improved.

Hereinafter, a battery pack according to an embodiment of the present invention will be described.

A battery pack according to an embodiment of the present invention may include at least one secondary battery and packaging for accommodating the secondary battery. Here, the secondary battery may be the secondary battery according to the embodiment of the present invention described above.

In this embodiment, the packaging may include a housing having a container shape for accommodating the secondary battery. The housing may be provided with at least one support frame for supporting the secondary battery.

Here, a bus bar for connecting the secondary battery accommodated in the housing to the outside, a vent plug for communicating the inside and the outside, and the like may be provided in the housing. The structure and shape of the packaging may be appropriately modified as necessary.

Hereinafter, a method for manufacturing a secondary battery according to an embodiment of the present invention (hereinafter, referred to as a manufacturing method) will be described.

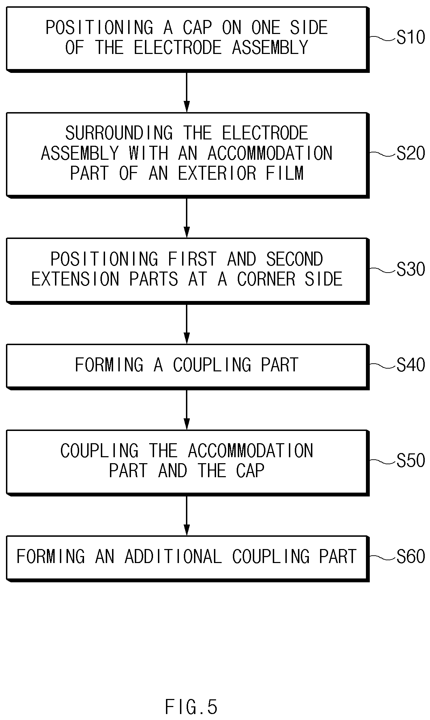

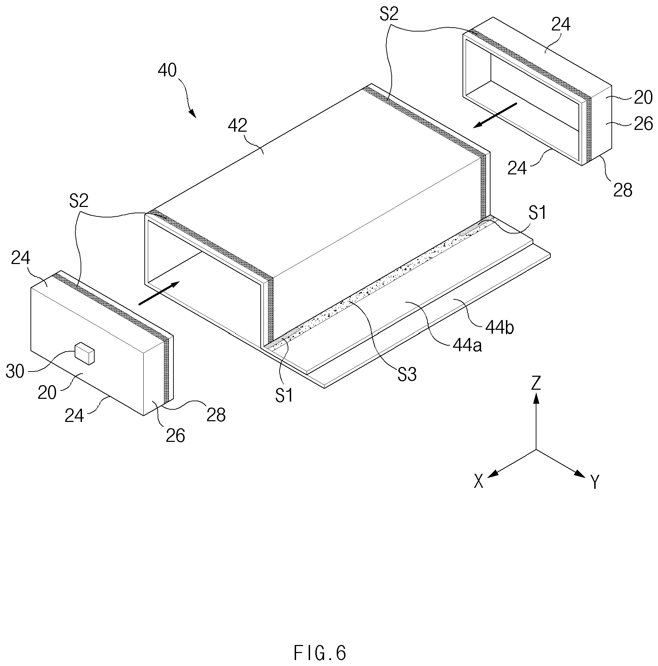

A manufacturing method according to an embodiment of the present invention may be the method for manufacturing the secondary battery according to the embodiment of the present invention described above. Of course, the method is not limited to the method for manufacturing only the secondary battery described above. FIG. 5 is a flowchart of a method for manufacturing a secondary battery according to the embodiment of this invention. FIG. 6 is a view for describing the method for manufacturing the secondary battery according the embodiment of this invention.

Referring to FIGS. 1, 2, and 5, in the manufacturing method according to an embodiment of the present invention, the cap 20 may be disposed on one side of the electrode assembly 10 (S10). Here, the cap 20 disposed in step S10 may be configured in the same manner as the cap 20 of the secondary battery 1 according to an embodiment of the present invention.

Here, in step S10, the cap 20 may be disposed on one side of the electrode assembly 10 in the longitudinal direction (the X-axis direction). When the cap 20 is provided in a pair, the pair of caps 20 may be disposed on both sides of the electrode assembly 10 in a longitudinal direction (the X-axis) respectively.

Next, in the manufacturing method according to an embodiment of the present invention, the electrode assembly 10 is surrounded by the accommodation part 42 of the exterior film 40 having the sheet shape (S20). Here, in step S20, as the accommodation part 42 surrounds the electrode assembly 10, an edge portion of the accommodation part 42 and an outer circumferential surface of the cap 20 may be disposed to overlap each other. In other words, the edge portion of the accommodations part 42 may surround the outer circumferential surface of the cover 20.

Here, the edge portion of the accommodation part 42 may be an edge portion disposed on one side in the longitudinal direction (the X-axis direction) of the electrode assembly 10, and the outer circumferential surface of the cap 20 may include the first to fourth surfaces.

Next, in the manufacturing method according to an embodiment of the present invention, the electrode assembly 10 is surrounded by the accommodation part 42 (S20), and the first extension part 44a and the second extension part 44b, which extend from one edge and the other edge of the accommodation part 42, respectively, are disposed to correspond to the corner 28 of the cap 20 (S30). Here, the order of steps S20 and S30 is not particularly limited.

Here, the positioning of the first and second extension parts 44a and 44b corresponding to the corner 28 in step S30 means that a portion closest to the accommodation part 42 among the various portions of the extension parts 44a and 42b is positioned adjacent to the corner 28.

Referring to FIGS. 1 and 3 to 6, in the manufacturing method according to an embodiment of the present invention, the first and second extension parts 44a and 44b are disposed at the corner 28 (S30), and the coupling part 46 is formed at a position corresponding to the corner 28 (S40). The coupling part 46 is configured to couple the first extension part 44a and the second extension part 44b.

To this end, heat or pressure may be applied to the first area S1 corresponding to the corner 28 among the various portions of the first extension part 44a or the second extension parts 44a and 44b. Accordingly, the resin layers provided on the outer surfaces of the first and second extension parts 44a and 24b or the cap 20 may be melted to form the coupling part 46 that couples the cap 20 and the exterior film 40.

As described above, according to the manufacturing method according to an embodiment of the present invention, since the coupling part 46 is formed at the corner 28 of the cap 20, the sealing property between the exterior film 40 and the cap 20 may be improved.

Here, when the cap 20 is provided in a pair, the first area S1 to which heat or pressure is applied in step S40 may be similarly provided on each of both sides of the electrode assembly 10 in the longitudinal direction.

Here, in step S40, the first area S1 to which heat or pressure is applied to form the coupling part 46 may be provided along the extending direction (X-axis direction) of the corner 28. A length of the first area S1 may correspond to a length of the corner 28. Accordingly, since the coupling part 46 may be formed in the entire section of the corner 28, the sealing property of the secondary battery may be further improved.

In this embodiment, the coupling part 46 is formed by melting the extension parts 44a and 44b or the resin layer of the cap 20. However, the coupling part 46 may be formed of another material as necessary. For example, the coupling part 46 may include a predetermined adhesive, and the first area S1 may be defined as an area to which the adhesive is applied.

Next, in the manufacturing method according to an embodiment of the present invention, forming a coupling part 46 that couples the first and second extension parts 44a and 44b (S40), and coupling the accommodation part 42 and the cap 20 (S50).

Here, according to this embodiment, since the relative positions of the cap 20 and the exterior film 40 are fixed to some extent by the coupling part 46 formed in step S40, step S50 may be more easily performed.

In step S50, to couple the cap 20 and the accommodation part 42 to each other, predetermined heat or pressure may be applied to the second area S2. Here, the second area S2 may be an area in which an edge portion of the accommodation part 42 and an outer circumferential surface of the cap 20 are disposed to overlap each other.

Accordingly, the resin layer provided on the outer surface of the cap 20 or the accommodation part 42 may be melted to couple both the components. Of course, if necessary, a separate adhesive may be applied to the second area S2 to couple the accommodation part 42 and the cap 20.

Referring to FIGS. 5 and 6, in the manufacturing method according to an embodiment of the present invention, the accommodation part 42 and the cap 20 are coupled to each other (S50), and additional coupling parts for coupling areas not coupled by the coupling parts 46 are formed in the first and second extension parts 44a and 44b (S60). Here, the sequence of steps S50 and S60 is not particularly limited.

To this end, in step S60, heat or pressure may be applied to the third area S3. Of course, a separate adhesive may be applied to the third area S3 to couple the first and second extension parts 44a and 44b.

Here, the third area S3 may be an area provided along an edge of the accommodation part 42. Here, the edge may be an edge, from among the edges of the accommodation part 41, on which the first or second extension parts 44a and 44b extend. The edge may extend along a longitudinal direction (X-axis direction) of the electrode assembly 10.

The additional coupling part formed in step S60 may extend along an edge of the accommodation part 42. Also, the coupling parts 46 may be provided on both sides of the additional coupling part in the longitudinal direction, respectively. Accordingly, the first extension part 44a and the second extension part 44b may be entirely coupled to each other, and the sealing of the secondary battery may be achieved.

The third area S3 may partially overlap the first area S1. Alternatively, the third area S3 may include the first area S1. In other words, the coupling part 46 and the additional coupling part may be connected to each other. Accordingly, the sealing property of the secondary battery may be further improved.

Although the present invention has been described with reference to the specific embodiments and drawings, the present invention is not limited thereto, and various changes and modifications may be made by those skilled in the art to which the present invention pertains within the technical spirit of the present invention and the equivalent scope of the appended claims.

### [DESCRIPTION OF REFERENCE NUMERALS]

1: Secondary Battery 10: Electrode Assembly
20: Cap 30: Terminal
40: exterior film L: corner length
C: center P1: first point
P2: second point P3: third point
P4: fourth point

## Claims

1. A secondary battery comprising:
a cap comprising a first face, a second face perpendicular or inclined to the first face, and a corner connecting the first face and the second face;
an electrode assembly, one side of which is covered by the cap; and
an exterior film comprising a sheet-shaped accommodation part surrounding the electrode assembly in a circumferential direction, first and second extension parts extending respectively from one edge and the other edge of the accommodation part, and a coupling part coupling the first and second extension parts to each other,
wherein the coupling part is disposed correspondingly to the corner.

2. The secondary battery of claim 1, wherein the coupling part is in contact with the corner.

3. The secondary battery of claim 1, wherein the corner is rounded.

4. The secondary battery of claim 1,
wherein the coupling part is disposed in one section between a first point and a second point with respect to a cross-section of the corner,
the first point is a point at which the corner and the first surface meet each other, and
the second point is a point at which the corner and the second surface meet each other.

5. The secondary battery of claim 4,
wherein the one section is a section from a third point to a fourth point,
where a length measured from the first point to the second point along the cross-section of the corner is referred to as a corner length,
the third point is spaced apart from the first point along the cross-section of the corner by one third of the length of the corner, and
the fourth point is spaced apart from the first point by 2/3 of the length of the corner along the cross-section of the corner.

6. The secondary battery of claim 4, wherein a cross-section of the corner has an arc shape or an elliptical arc shape.

7. The secondary battery of claim 6, wherein the one section is a section from the third point to the fourth point,
the third point is spaced apart from the first point by 30 degrees with respect to a center of the circular arc or the elliptical arc, and
the fourth point is spaced apart from the first point by 60 degrees with respect to the center of the circular arc or the elliptical arc.

8. The secondary battery of claim 1, wherein the electrode assembly extends in a first direction,
the cap covers one side of the electrode assembly in the first direction, and
the corner and the coupling part extend along the first direction.

9. The secondary battery of claim 1, wherein the cap is provided in a pair and disposed on each of both sides of the electrode assembly, and
the coupling part is provided in a pair to correspond to the cap.

10. The secondary battery of claim 1, wherein the first extension part is parallel to the second extension part.

11. The secondary battery of claim 1, wherein the first surface is perpendicular to the second surface.

12. The secondary battery of claim 1, wherein the coupling part is formed by bonding the first extension part and the second extension part to each other.

13. A method for manufacturing a secondary battery, the method comprising:
positioning a cap including a first surface, a second surface perpendicular to or inclined to the first surface, and a corner connecting the first surface and the second surface on one side of the electrode assembly;
surrounding the electrode assembly with an accommodation part of an exterior film having a sheet shape;
positioning first and second extension parts extending respectively from one edge and the other edge of the receiving portion, to correspond to the corner; and
forming a coupling part for coupling the first extension part and the second extension part to each other at a position corresponding to the corner.

14. The method of claim 13, further comprising:
coupling the first and second surfaces to the accommodation part.

15. The method of claim 14, wherein the forming of the coupling part is performed before the coupling of the first and second surfaces to the accommodation part.

16. The method of claim 14, further comprising forming an additional coupling part to couple areas of the first and second extension parts, which are not coupled by the coupling part.

17. The method of claim 16, wherein the additional coupling part extends along the edge of the receiving part, and
the coupling part is disposed at one end of the additional coupling part.

18. The method of claim 13, wherein in the step of forming the coupling part, heat or pressure is applied to at least one of the first extension part and the second extension part.
